# EUROPEAN PATENT APPLICATION

(11) **EP 2 618 004 A1**
(43) Date of publication of application: **24.07.2013**
(21) Application number: 11828533.7
(22) Date of filing: 25.05.2011
(51) Int. Cl.: F04D 29/58, F04D 13/06

(54) **ELECTRIC PUMP**

(30) Priority: 29.09.2010 JP 2010219940
(71) Applicant: Aisin Seiki Kabushiki Kaisha, Aichi 448-8650 (JP)
(72) Inventor: SUGIMURA Keita, Kariya-shi Aichi 448-8650 (JP); KAWAJI Manabu, Kariya-shi Aichi 448-8650 (JP)
(74) Representative: Kramer - Barske - Schmidtchen
(86) International application number: PCT/JP2011/061956
(87) International publication number: WO 2012/042971

(57) **Abstract**

To provide an electric pump that does not easily suffer malfunction of its driver due to vibration and whose components can be reduced in number, an electric pump includes a pump unit, a motor unit for driving the pump unit, and a driver chamber having a driver for controlling the pump unit. At least a space inside the driver chamber on one side of a substrate of the driver is filled with an amount of potting material for anchoring the substrate, whereas a space inside the driver chamber on the other side of the substrate is left as an unfilled space free from filling with potting material along the face direction of the substrate.

## Description

### Technical Field

The present invention relates to an electric pump including a pump unit, a motor unit for driving the pump unit and a driver chamber having a driver for controlling the pump unit.

### Background Art

An example of the electric pump described above is known from Patent Document 1 for instance. With this electric pump, in order to promote heat discharge from the driver, a sheet-like heat discharging material is interposed between the driver and a cover of the driver chamber. With provision of this heat discharging material, heat of the driver is positively conducted via the heat discharging material to the cover to be air-cooled via this cover. As a result, heat discharge of the driver can be effected in an efficient manner.

### Prior Art Document

### Patent Document

Patent Document: Japanese Unexamined Patent Application Publication No. 2005-337095

### Disclosure of the Invention

### Object to be Achieved by Invention

The driver substrate of this electric pump is fixed with a screw member to leading ends of a plurality of attaching projections formed of resin integrally with a motor housing. For this reason, vibration occurring in the motor unit and/or the pump unit can be easily transmitted to the substrate, which can result in turn to damage in a connector terminal or a terminal which electrically connects the motor unit with the driver or give adverse effect to various electronic elements mounted on the substrate. Further, if a gap is developed between the heat discharging material and the cover in the electric pump of Patent Document 1, this inhibits smooth conduction of heat from the driver to the cover, so that there is a risk of significant deterioration in the heat discharging performance. Accordingly, in order to provide secure contact between the cover and the heat discharging material, the cover is screw-fixed to the motor housing and also a sealing member is provided for ensuring sealing performance at this fixing portion. Therefore, the above arrangement would invite increase in the number of components.

The present invention has been made in view of the above-described state of the art and its object is to provide an electric pump that does not easily suffer malfunction of its driver due to vibration and whose components can be reduced in number.

### Means for Achieving the Object

According to a first characterizing feature of an electric pump relating to the present invention, an electric pump comprises: a pump unit; a motor unit for driving the pump unit; and a driver chamber having a driver for controlling the pump unit; wherein at least a space inside the driver chamber on one side of a substrate of the driver is filled with an amount of potting material for anchoring the substrate, whereas a space inside the driver chamber on the other side of the substrate is left as an unfilled space free from filling with potting material along the face direction of the substrate.

With the above-described arrangement, the substrate of the driver is fixed with potting material. Hence, vibration occurring in the motor unit and/or the motor unit is damped by the potting material, thus reducing the vibration to be transmitted to the substrate. Accordingly, damage to a connector terminal or a terminal can be prevented and adverse effect to various electronic elements mounted on the substrate can be restricted.

As the potting material, urethane resin can be employed for instance. If the entire driver chamber were filled with potting material, there would be left no space for allowing escape of the potting material when expanded by heat, thus providing significant load to the substrate disadvantageously. Accordingly, by leaving an unfilled space free from filling with potting material along the face direction of the substrate as provided in the above-described arrangement, the potting material when heat-expanded can escape into the unfilled space. Hence, it is possible to reduce the load applied to the substrate at the time of heat expansion of the potting material. Further, heat generated in the driver will be absorbed in the potting material, so that the the heat may be discharged via this potting material from the wall face of the driver chamber. Consequently, rise of temperature of the substrate can be reduced.

According to a second characterizing feature, the substrate is covered in its entire surface with the potting material.

The surface of the driver substrate is generally provided with a coating treatment for ensuring water resistance and/or protection of the substrate. However, with the above-described arrangement, the potting material provided originally for fixation of the substrate can function also as a coating material. Hence, the step of coating treatment can be omitted.

According to a third characterizing feature, the potting material is placed in contact with a heat discharging portion of a wall unit constituting the driver chamber which portion is exposed to ambient air.

With the above-described arrangement, as the potting material is placed in contact with the heat discharging portion, the heat of the potting material can be readily discharged to the outside of the electric pump. Hence, as the potting material is deformed by the heat, the load applied to the substrate of the driver can be reduced.

According to a fourth characterizing feature of the present invention, a gap between a heat generating face of the substrate and a heat discharging portion of the wall unit constituting the driver chamber which portion is exposed to ambient air is filled with the potting material.

With the above-described arrangement, if the gap between the heat generating face of the substrate and the heat discharging portion of the driver chamber is filled with the potting material, heat can be positively conducted from the heat generating face via the potting material to the heat discharging portion and this heat can be air-cooled by the heat discharging portion. Therefore, the heat of the driver can be discharged even more efficiently.

According to a fifth characterizing feature of the present invention, a base end portion of a capacitor provided in the driver is coated with the potting material and a leading end portion of the capacitor is caused to project into the unfilled space.

If the capacitor which projects with a certain height from the substrate were entirely covered with the potting material, a force would be applied to the leading end portion of the capacitor in association with expansion or contraction of the potting material with change of temperature. Then, the base end portion would be exposed to a moment which is the product of this force multiplied by the height of the capacitor. As a result, there is the risk of exposing the leading end portion of the capacitor to a significant load. Then, if the leading end portion of the capacitor is caused to project into the unfilled space as provided in the above-described arrangement, such force associated with expansion or contract of the potting material will not be applied to the leading end portion. As a result, the load to the base end portion can be reduced.

According to a sixth characterizing feature, at least both a motor housing accommodating the motor unit and a driver case constituting the driver chamber are formed of resin and the motor housing and the driver case are formed integral with each other by means of welding.

If the motor housing and the driver case are formed integral by welding as provided in the above-described arrangement, a screw member for attaching the driver case to the motor housing or a sealing member to be disposed between the motor housing and the driver case can be omitted. As a result, further reduction in the number of components is made possible.

According to a seventh characterizing feature, the space on the one side is a space opposite the motor unit relative to the substrate and the space on the other side is a space on the side of the motor unit relative to the substrate.

With the above-described arrangement, of the spaces delimited in the driver chamber, the potting material is to fill the space opposite the motor unit relative to the driver substrate. Hence, the heat of the potting material can be readily discharged to the outside of the electric pump. Then, as the potting material is deformed by the heat, the load applied to the substrate of the driver can be reduced.

According to an eighth characterizing feature, the driver chamber is provided with a positioning portion for positioning the substrate.

With the above-described arrangement, with provision of the positioning portion, movement of the substrate at the time of filling of the potting material can be restricted. Accordingly, a connector terminal to be electrically connected to a power source or a terminal to be electrically connected to the coil of the motor unit can be reliably engaged at a predetermined position on the substrate with greater ease. Further, since the presence of the positioning portion provides reduction in irregularity in the attachment position of the substrate, the filling amount of the potting material can be rendered constant.

According to a ninth characterizing feature, the substrate is fixed inside the driver chamber by the potting material, without using any screw member.

With the above-described arrangement, a screw member of the like for fixing the substrate can be omitted. So that, further reduction in the number of components and reduction of the weight of the electric pump are made possible.

### Brief Description of the Drawings

[Fig.1] is a section view showing an embodiment of an electric pump relating to the present invention, and
[Fig. 2] is an explanatory view illustrating a fixing procedure of a driver.

### Embodiments of the Invention

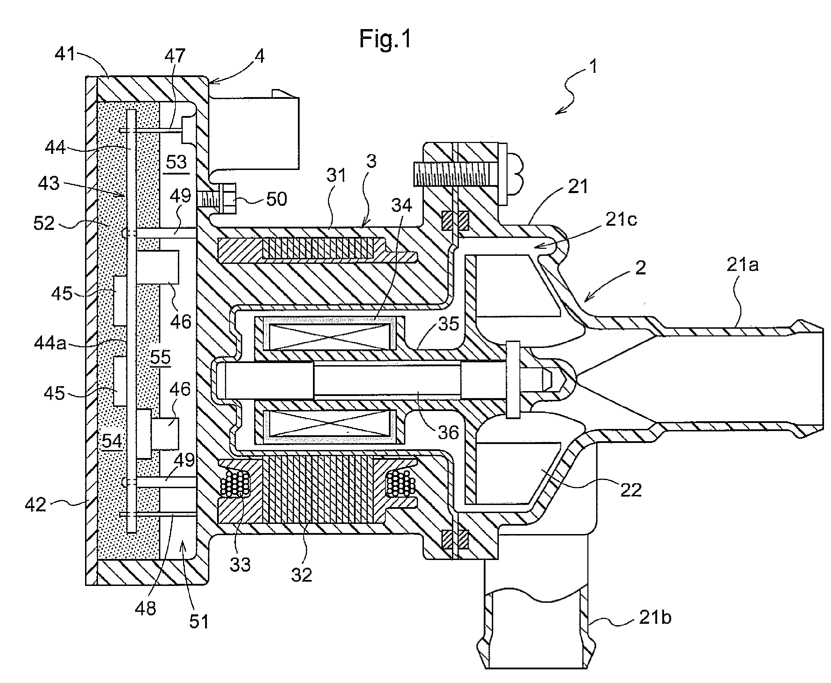

Next, embodiments of an electric pump relating to the present invention will be explained with reference to the accompanying drawings. As shown in Fig. 1, an electric pump 1 relating to this embodiment includes a pump unit 2, a motor unit 3 for driving the pump unit 2, and a driver chamber 4 having a driver 43 for controlling the motor unit 3.

A pump housing 21 accommodating the pump unit 2 is formed of resin; and a cylindrical inlet opening 21 a and a cylindrical discharge opening 21 b are formed in this housing 21. These inlet opening 21 a and discharge opening opening 21b are communicated respectively to an impeller chamber 21 c formed inside the pump housing 21. The impeller chamber 21 c accommodates an impeller 22. In association with rotation of this impeller 22, an amount of fluid is introduced into the impeller chamber 21 c via the inlet opening 21 a and at the same time an amount of fluid is discharged from the impeller chamber 21 c to the discharge opening 21 b.

A motor housing 31 accommodating the motor unit 3 is made of resin, as is so with the pump housing 21. And, in this motor housing 31, there is integrally mounted a stator 32 by insert molding technique. On the radially inner side of the stator 32, a rotor 34 is provided. And, this rotor 34 is formed integral with one terminal end of a rotary member 35 formed of resin. When the rotor 34 is rotated, the rotary member 35 is rotated about a pivot shaft 36. At the other terminal end of the rotary member 35, the impeller 22 is formed and this impeller 22 is rotated in unison with the rotor 34 and the rotary member 35.

In the driver chamber 4, a driver case 41 formed integral with the motor housing 31 and a resin cover 42 fixedly welded to this driver case 41 together form an inner space 51. This inner space 51 consists of an ambient air side space 54 provided on the side opposite the motor unit 3 relative to a substrate 44 of a driver 43 and a motor side space 55 provided on the side of the motor unit 3. On one face of the substrate 44 of the driver 43, FET 45 as heat generating elements are mounted. And, on the other face thereof, there are mounted capacitors 46. Incidentally, Fig. 1 shows only the FET 45 and the capacitors 46, but the construction of the driver 43 is not limited thereto. And, various other necessary electronic elements can be provided also.

To the substrate 44, there are connected a connector terminal 47 for electrically connecting an unillustrated power source to the driver 43 and a terminal 48 for electrically connecting the coil 33 to the driver 43. The substrate 44 of the driver 43 is anchored with a potting material 52 of e.g. urethane resin. Therefore, vibration occurring in the motor unit 3 and/or the pump unit 2 is damped by the potting material 52, thereby to reduce the amount of vibration to be transmitted to the substrate 44. Consequently, it is possible to prevent damage to the connector terminal 47 or the terminal 48 and also to restrict adverse effect due to vibration to the various electronic elements mounted on the substrate 44. Further, since the substrate 44 is fixed (anchored) with the potting material 52, no screw member or the like is needed for fixing the substrate 44, so that reduction in the number of components is made possible.

The potting material 52 is not to be charged to fill the entire inner space 51 of the driver chamber 4, but will be charged to leave an unfilled space 53 not filled with the potting material 52 along the face direction of the substrate 44. In this way, with leaving the unfilled space 53, the potting material 52 when expanded by heat, can escape into this unfilled space 53, so that the load to the substrate 44 can be reduced.

On the other hand, the substrate 44 is covered, in its entire surface, with the potting material 52. Hence, it is possible to omit a coating treatment to this substrate 44. Further, a heat generating face 44a of the substrate 44 on which face the FET 45 as the heat generating elements are mounted is disposed to face a cover 42 as a heat discharging portion to be exposed to ambient air; and a gap between this heat generating face 44a and the cover 42 is filled with the potting material 52. Accordingly, heat generated by the driver 43 is discharged from the cover 42 via the potting material 52, whereby rise of temperature of the driver 43 can be restricted advantageously. For enhancement of this effect, it is advantageous to employ a material having high heat conductivity as the potting material 52.

Further, in this embodiment, the base end portion of the capacitor 46 mounted on the substrate 44 is covered with the potting material 52, whereas the leading end portion of the capacitor 46 is caused to project into the unfilled space 53. With this arrangement, it is possible to avoid application of a force to the leading end portion of the capacitor 46 in association with expansion/contraction of the potting material 52 due to change in temperature, thereby to reduce the load to the base end portion. In case the capacitor 46 is configured as a stepped construction having a large-diameter mount portion 46a and a small-diameter head portion 46b, it will be advantageous to cover the mount portion 46a with the potting material 52. Further, in case an electronic element having a relatively large height, other than the capacitor 46, is provided, it is preferred to have the leading end portion of such electronic element too covered with the potting material 52, with the leading end portion thereof being caused to project into the unfilled space 53.

In operation of the electric pump 1 configured as described above, in response to electric power supply to the coil 33 by the driver 43, the rotor 34 effects rotation by the electromagnetic action between the stator 32 and this rotor 34. As a result of this, the impeller 22 effects rotation, which causes in turn introduction of fluid into an impeller chamber through the inlet opening 21a as well as discharging of fluid from the impeller chamber 21 c through the discharge opening 21 b, so that the pump unit 2 functions as a fluid pump.

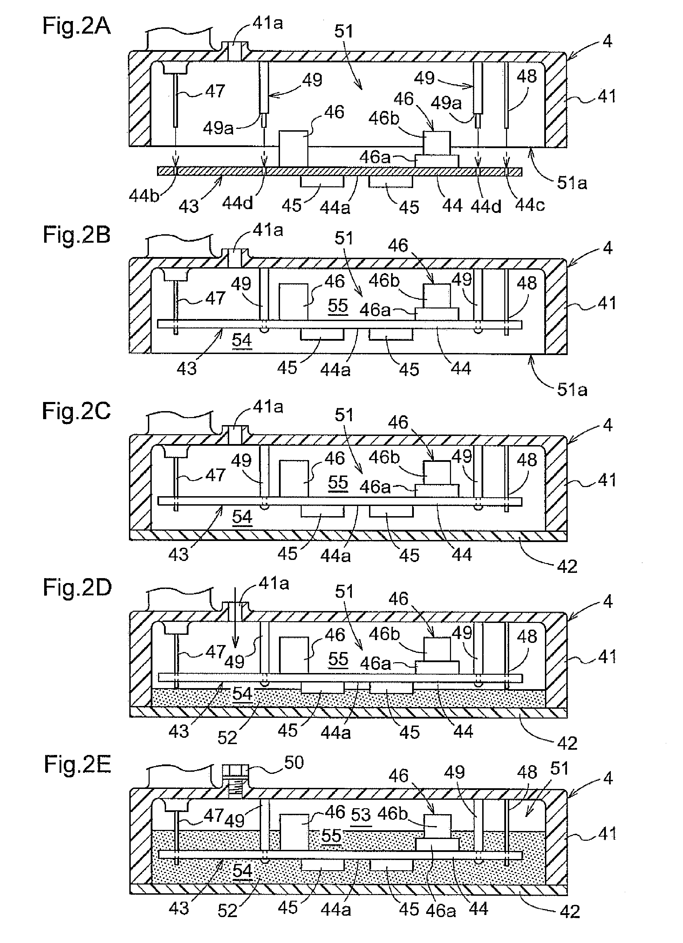

Next, with reference to Fig. 2, there will be explained a procedure for fixing the driver 43 in the driver chamber 4. As shown in Fig. 2 (a), the face of the driver case 41 on the side of the motor unit 3 defines an introducing opening 41 a for introducing the potting material 52. And, on this face defining the introducing opening 41 a, there are provided the connector terminal 47, the terminal 48 and two positioning projections 49 that project into the inner space 51. The positioning projections 49 are formed by resin molding together with the driver case 41 and each projection 49 includes a stepped portion 49a at the border between the large-diameter portion and the small-diameter portion. On the other hand, the substrate 44 defines, at positions corresponding respectively to the connector terminal 47, the terminal 48 and the positioning projections 49, a connector terminal hole 44b, a terminal hole 44c and positioning holes 44d.

Referring now to Fig. 2 (b), the connector terminal 47 is inserted into the connector terminal hole 44b, the terminal 48 is inserted into the terminal hole 44c and the positioning projections 49 are inserted into the positioning holes 44d, respectively. Then, while the outer peripheral portion of each positioning hole 44d is placed in contact with the stepped portion 49a of the positioning projection 49 corresponding thereto, a portion of the positioning projection 49 is melted, thus being welded to the substrate 44. Namely, the positioning projections 49 are utilized for positioning and temporary fixing of the driver 43. Incidentally, the shape, the number and layout of the positioning projections 49 may vary as appropriately. Also, the means for positioning and temporary fixing of the driver 43 is not limited to provision of the positioning projections 49. After temporary fixing of the driver 48, the connector terminal 47 and the terminal 48 are soldered to the substrate 44.

Upon completion of the temporary fixation of the driver 43, as shown in Fig. 2 (c), the resin cover 42 is heat-fused or welded to the driver case 41. And, as shown in Fig. 2 (d), an amount of potting material 52 is poured through the introducing opening 41a into the inner space 51 of the driver chamber 4. In the course of this pouring of the potting material 52, it is advantageous to keep a sufficient distance between the driver case 41 and the substrate 44 so that the potting material 52 may be charged smoothly between the cover 42 and the substrate 44.

As shown in Fig. 2 (e), when the potting material 52 has been charged to such a degree as to cover the base end portion (e.g. the mount portion 46a) of the capacitor 46, but not to cover the leading end portion thereof (e.g. the head portion 46b); in other words, when the potting material 52 has been charged to such a degree as to fill the ambient air side space 54 of the inner space 51 with leaving the unfilled space 53 in the motor side space 55, introduction of the potting material 52 is stopped. Lastly, the introducing opening 41 a is closed with a plug member 50.

### [Other Embodiment]

The driver case 41 may be provided separately from the motor housing 31. Then, the substrate 44 of the driver 43 will be fixed with the potting material 52 and the driver case 41 will be integrated with the motor housing 31 by means of welding, bolt fastening or the like, thereby to construct the electric pump 1. Further, the driver case 41 may be formed of a material other than resin, such as aluminum.

### Industrial Applicability

The application of the electric pump relating to the present invention is not limited to the type of pump using an impeller. The invention may be applied to other kinds of pump, such as a positive displacement pump.

**Description of Reference Marks/Numerals**

| | |
|---|---|
| 1 | electric pump |
| 2 | pump unit |
| 3 | motor unit |
| 4 | driver chamber |
| 31 | motor housing |
| 41 | driver case |
| 42 | cover (heat discharging portion) |
| 43 | driver |
| 44 | substrate |
| 44a | heat generating face |
| 45 | FET (heat generating element) |
| 46 | capacitor |
| 49 | positioning projection (positioning portion) |
| 52 | potting material |
| 53 | unfilled space |
| 54 | ambient air side space (space on one side) |
| 55 | motor side space (space on the other side) |

## Claims

1. An electric pump comprising:
a pump unit;
a motor unit for driving the pump unit; and
a driver chamber having a driver for controlling the pump unit;
wherein at least a space inside the driver chamber on one side of a substrate of the driver is filled with an amount of potting material for anchoring the substrate, whereas a space inside the driver chamber on the other side of the substrate is left as an unfilled space free from filling with potting material along the face direction of the substrate.

2. An electric pump according to claim 1, wherein the substrate is covered in its entire surface with the potting material.

3. An electric pump according to claim 1 or 2, wherein the potting material is placed in contact with a heat discharging portion of a wall unit constituting the driver chamber which portion is exposed to ambient air.

4. An electric pump according to claim 3, wherein a gap between a heat generating face of the substrate and a heat discharging portion of the wall unit constituting the driver chamber which portion is exposed to ambient air is filled with the potting material.

5. An electric pump according to any one of claims 1-4, wherein a base end portion of a capacitor provided in the driver is coated with the potting material and a leading end portion of the capacitor is caused to project into the unfilled space.

6. An electric pump according to any one of claims 1-5, wherein at least both a motor housing accommodating the motor unit and a driver case constituting the driver chamber are formed of resin and the motor housing and the driver case are formed integral with each other by means of welding.

7. An electric pump according to any one of claims 1-6, wherein the space on the one side is a space opposite the motor unit relative to the substrate and the space on the other side is a space on the side of the motor unit relative to the substrate.

8. An electric pump according to any one of claims 1-7, wherein the driver chamber is provided with a positioning portion for positioning the substrate.

9. An electric pump according to any one of claims 1-8, wherein the substrate is fixed inside the driver chamber by the potting material, without using any screw member.
